# EUROPEAN PATENT APPLICATION

(11) **EP 1 604 766 A2**
(43) Date of publication of application: **14.12.2005**
(21) Application number: 05009967.0
(22) Date of filing: 06.05.2005
(51) Int. Cl.: B23H 7/10

(54) **Support piece for the lower wire guide of a wire electrical discharge machine**

(30) Priority: 10.06.2004 CH 9842004
(71) Applicant: CHARMILLES TECHNOLOGIES S.A., 1217 Meyrin 1 (CH)
(72) Inventor: Batelaan, Dirk Cornelis, 1212 Grand Lancy (CH); Navarrete, Miguel, 1204 Genève (CH); Terekhov, Konstantin, 1214 Vernier (CH); Grandjean, Michel Marcel Robert, 1242 Satigny (CH)
(74) Representative: Weiss, Wolfgang

(57) **Abstract**

The invention relates to a support piece for the lower wire guide of a wire electrical discharge machine, intended to replace a one-piece part made of stainless steel (1) made up of three coaxial cylindrical sections, the lst section (14) forming a flange fixed to the casing (13) of the lower head, the second (16) comprising a screw thread (17) supporting the injection nozzle (3), the third (18) comprising a threaded end-piece (12) onto which the securing nut (5) of the wire guide (4) is screwed, characterized in that it comprises means making it possible to electrically isolate the said securing nut of the wire guide (5) from the electrical earth of the installation.

## Description

The present invention relates to a piece supporting the lower wire guide in a wire electrical discharge machine. Let us remember that in most of these machines, the electrode wire, close to the vertical position, is taut and paid out between two wire guides each installed in a machining head, an upper one and a lower one, at the machining zone. In general, the workpiece is machined in total immersion in a dielectric liquid and, what is more, the wire is sprayed by injection nozzles from above and from below with pressurized dielectric liquid injected through the machining heads. Complicated devices for threading and automatically re-threading the electrode wire are incorporated into the upper and lower heads to allow the wire to be installed before the start of machining, removed at the end of machining or to allow machining to be resumed in the event of accidental breakage.

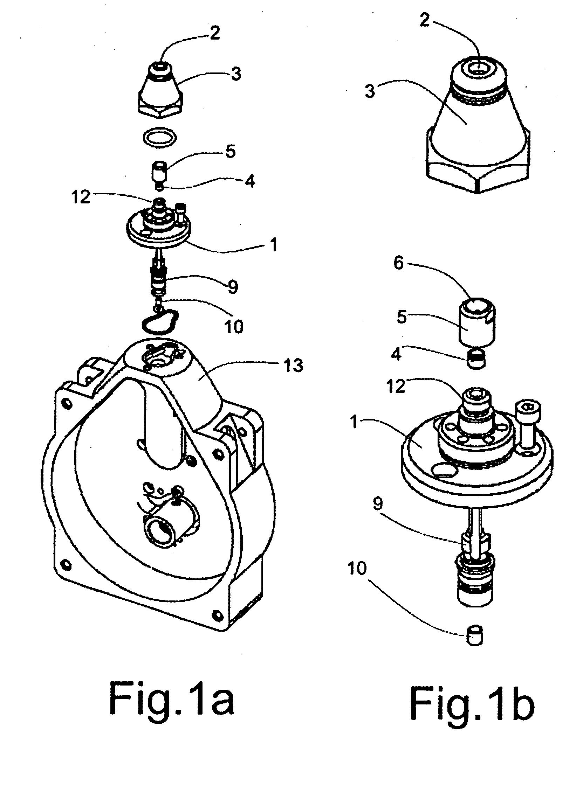

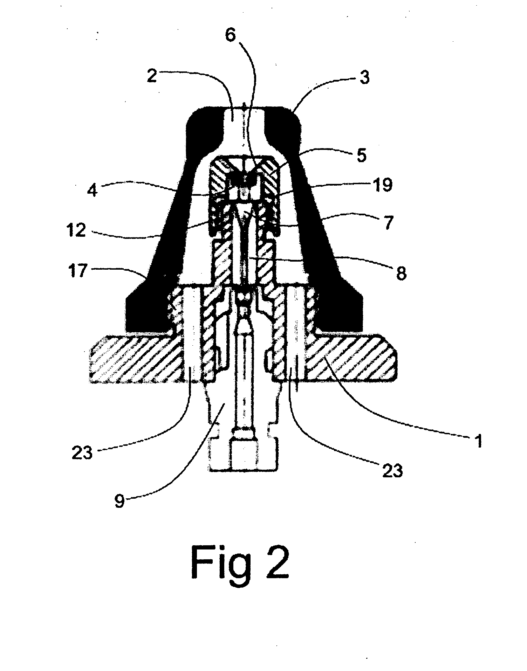

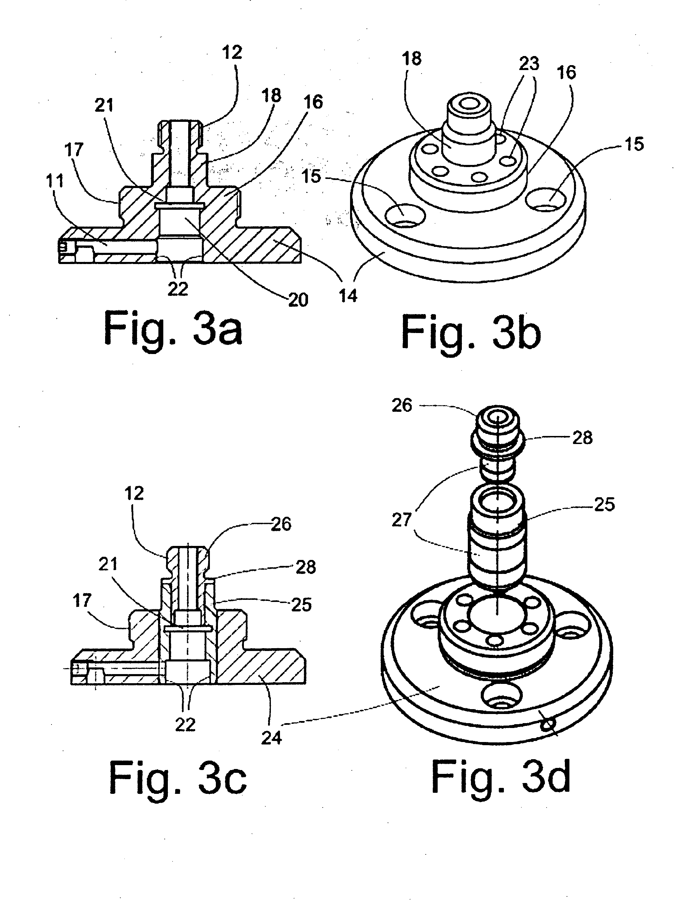

Figure 1a is an exploded view of the lower machining head of a wire electrical discharge machine in which the support piece 1 for the wire guide, on which the invention is based, is situated. During the automatic threading sequence, the electrode wire, not depicted, leaving the machining zone is routed downwards in a jet of liquid which forces it to enter the lower head, first of all negotiating the orifice 2 of the injection nozzle 3. Thereafter, it is trapped in the toric guide 4 fixed in the nut 5, which has a 6 to 90° inlet cone which immediately directs the end of the wire towards the orifice of the wire guide 4. Having negotiated the wire guide 4, the wire enters a small annular chamber 19, Figure 2, under the pressure of the dielectric liquid, which prevents it from deviating from the vertical path to cause it to enter, via an inlet cone 7, a tube 8 made of insulating material (Delrin). The latter tube 8 forms part of a complex-shaped piece 9 made of Delrin, screwed into the support 1 and into the lower part of which a sapphire second wire guide 10 is crimped. The said complicated piece 9 conveys the liquid upwards from the' duct 11 in Figure 3a, towards the small annular chamber 19. On leaving the second guide 10, the wire is deflected then trapped between two motorized rollers, not depicted, which pull it along.

The first wire guide 4, for example with an inside diameter of 0.1 mm made of natural diamond which is an insulator, is pressed against its support 1 by the stainless steel nut 5 screwed onto the end-piece 12 of the support 1. Thereafter, the nut 5 is electrically earthed by connection to the electrical earth of the installation via the support 1 and the casing of the lower head 13, also made of stainless steel, to which the support 1 is fixed.

Because they become worn, various pieces of the assembly described hereinabove have to be replaced and adjusted at least every 300 operating hours, for example the sapphire guide 10, in accordance with a procedure described in detail in the customer maintenance manual that comes with ROBOFIL machines, particularly in the section entitled "défaut circuit fil [wire circuit fault]" which sets out the various critical parts of this device including, in particular, the nut 5 and the wire guide support piece 1 that underlies the present invention.

The apparently trivial device described hereinabove nonetheless conceals a weakness brought about by the phenomenon of electrolysis that is well known with this type of machine; in this regard, refer for example to document EP 1 097 773. The environment discussed hereinabove is particularly exposed to electrolysis. In spite of the protective devices described in the aforementioned document, after operation for around a hundred hours, it remains difficult to fully protect certain critical parts of the wire electrical discharge machines. The nut 5 comprising the wire inlet cone 6 is, from this standpoint, a piece particularly subject to the destructive action of electrolysis. It should be noted that the spacing between the electrode wire and the nut 5 is particularly small. In time, the inlet cone 6 of the nut 5, initially polished so as not to catch on the end of the wire when the wire is being threaded, becomes rough as a result of electrolytic deposition. After a few months of operation, the automatic threading operations become less reliable, and this leads to a significant reduction in the profitability of the machine and means that the nut 5 has to be replaced frequently.

The object of the present invention is to overcome the aforementioned disadvantages using means that make it possible to electrically insulate the inlet cone 6 from the electrical earth of the installation, as described in Claim 1.

One preferred embodiment is explained with the aid of the figures.
Figure 1a is an exploded perspective view of the surroundings of the lower machining head of a wire electrical discharge machine.
Figure 1b is an enlarged view of the previous one showing the elements directly linked with the support for the lower wire guide 1.
Figure 2 depicts, in section, the elements of Figure 1b assembled.
Figure 3a is a view in section of the initial piece 1 underlying the invention.
Figure 3b depicts the same piece 1 in perspective.
Figure 3c is a view in section of the composite three-part piece that forms the subject of the invention and is intended to replace the initial piece 1.
Figure 3d is an exploded perspective view of the same piece.

As the problem associated with electrical conduction in this environment appeared only after prolonged use, the nut 5 screwed onto the support 1 was initially made of stainless steel in order, on the one hand, that it could withstand significant tightening forces without appreciable deformation and, on the other hand, in order that it did not carry the risk of becoming broken in the event of accidental collision in the machining zone. The rigidity of the whole is of primordial importance in guaranteeing the stable positioning of the wire guide 4. Electrical insulation of the nut 5 could be achieved simply by replacing the metal of its support 1 with an insulating material; that is to say by making the same part 1 out of ceramic or plastic for example. However, the use of ceramics leads to a prohibitive cost price and does not give the necessary impact strength. Plastics, on the other hand, do not offer sufficient rigidity to allow them to withstand the clamping forces required.

An ideal compromise was reached by creating a new composite piece as a replacement for the lower wire guide support 1 as described in Claim 2. The initial stainless steel one-piece part 1 is made up mainly of three coaxial cylindrical sections. The 1st section, of larger diameter 14, forming a flange is fixed to the chassis 13 of the lower head by means of three bores 15. The section of intermediate diameter 16 comprises a screw thread 17 supporting the injection nozzle 3 to which the latter is screwed. The smallest-diameter third section 18 comprises a threaded end-piece 12 which is a direct support for the wire guide 4 and onto which the nut 5 comprising the inlet cone 6 is screwed. A first flow of dielectric liquid is injected via a radial canal 11 pierced in the flange 14 and ends up in the axial through-passage 20, Figure 3a, where it is routed upwards via the complicated tubular piece 9 made of Delrin which feeds into the small chamber 19. The axial through-passage 20 comprises an annular groove 21 creating a clearance that allows the liquid to pass upwards. The axial through-passage 20 also comprises an internal screw thread 22 for the attachment of the complicated Delrin part 9. A second flow of dielectric liquid feeds into the injection nozzle 3 via six vertical bores 23, Figures 2 and 3b, parallel to the overall axis.

In a preferred embodiment, the problem associated with electrolysis explained hereinabove has been solved by creating a composite piece in three parts, of which one is insulating, Figures 3c and 3d; the new piece having the same overall dimensions as the initial one-piece part 1. The 1st part 24 made of stainless steel includes the flange 14 and the outside of the injection nozzle support with its screw thread 17. The 2nd part 25 is a sleeve made of insulating material which internally reproduces the groove 21 and the screw thread 22. The 3rd part 26, electrically insulated from the 1st by the 2nd, constitutes the threaded end-piece 12 onto which the nut 5 is screwed with a small flange 28 which rests against the top of the sleeve 25.

The material adopted for the insulating sleeve 26 is a glass-fibre-filled epoxy resin known as DUROTENAX 521.01 manufactured by Von Roll Isola. It is assembled by bonding with Araldite. In order to contain the adhesive at the time of assembly, clearances 27 are made on the external cylindrical interfaces of the sleeve 23 and of the end-piece 26.
The definitive shape of the insulating sleeve 25 and of the two contiguous pieces 24, 26, is the result of several fruitless attempts which ended in breakages of the intermediate piece as a result of simulated conditions or required clamping forces. It should be noted that the overlap of the end-piece part 26 inside the flange part 24 avoids the sleeve 25 breaking in shear in the event of a lateral impact. The small flange 28 on the end-piece part 26 ensures precise positioning at the time of bonding.

It must of course be understood that the embodiment described hereinabove, of a new support for the lower wire guide intended to replace the initial part 1, is not in any way limiting and that it can be adapted while at the same time respecting the dimensions of the other original pieces that make up the spent wire guide device depicted in Figures 1a and 1b. The insulating intermediate sleeve 26 may have a greater or lesser outside diameter and height. The material of this sleeve may consist of any insulating material that allows for stable assembly with the other two parts and offers sufficient mechanical rigidity; etc.

## Claims

1. Support piece for the lower wire guide of a wire electrical discharge machine,
- intended to replace a one-piece part made of stainless steel (1) made up of three coaxial cylindrical sections, the 1st section (14) forming a flange fixed to the casing (13) of the lower head, the second (16) comprising a screw thread (17) supporting the injection nozzle (3), the third (18) comprising a threaded end-piece (12) onto which the securing nut (5) of the wire guide (4) is screwed,
- **characterized in that** it comprises means making it possible to electrically isolate the said securing nut of the wire guide (5) from the electrical earth of the installation.

2. Support piece for the lower wire guide of a wire electrical discharge machine, according to Claim 1, **characterized in that** the said means consist in assembling a three-part piece, the parts including an insulating intermediate sleeve (25), the said assembled piece having the same overall dimensions and performing the same functions as the initial one-piece part (1).

3. Support piece for the lower wire guide of a wire electrical discharge machine, according to Claim 2, **characterized in that** the said intermediate sleeve (25) is made with glass-fibre-filled epoxy resin.

4. Support piece for the lower wire guide of a wire electrical discharge machine, according to Claim 2, **characterized in that** the two conducting parts (24, 25), insulated from one another by the intermediate sleeve (25) include an overlap able to prevent the intermediate sleeve (25) from breaking in shear in the event of a lateral impact.
